# EUROPÄISCHE PATENTSCHRIFT

(11) **EP 1 081 665 B1**
(45) Veröffentlichungstag und Bekanntmachung des Hinweises auf die Patenterteilung: **08.06.2005**
(21) Anmeldenummer: 99117290.9
(22) Anmeldetag: 02.09.1999
(51) Int. Cl.: G07F 19/00, G07F 7/08, G06F 17/60

(54) **Expertensystem**
Expert system
Système expert

(43) Veröffentlichungstag der Anmeldung: 07.03.2001
(73) Patentinhaber: GZS Gesellschaft für Zahlungssysteme mbH, 61118 Bad Vilbel (DE); Inform GmbH, 52076 Aachen (DE)
(72) Erfinder: Von Altrock, Constantin, Dipl.-Ing., 52076 Aachen (DE); Hepp, Hanns Michael, Dipl. pol., 65817 Eppstein (DE); Praschinger, Johann, 60389 Frankfurt (DE)
(74) Vertreter: Maiwald, Walter, Dr. Dipl.-Chem.

(56) Entgegenhaltungen:
- EP-A- 0 257 745
- EP-A- 0 418 144
- EP-A- 0 715 306
- WO-A-89/06398
- FR-A- 2 732 486
- GB-A- 2 194 655
- US-A- 5 560 352
- YAGER R R: "Fuzzy logics and artificial intelligence" , FUZZY SETS AND SYSTEMS,NL,ELSEVIER SCIENCE PUBLISHERS, AMSTERDAM, VOL. 90, NR. 2, PAGE(S) 193-198 XP004086849 ISSN: 0165-0114 * das ganze Dokument *
- YAGER R R ET AL: "FUZMAR: AN APPROACH TO AGGREGATING MARKET RESEARCH DATA BASED ON FUZZY REASONING" , FUZZY SETS AND SYSTEMS,NL,ELSEVIER SCIENCE PUBLISHERS, AMSTERDAM, VOL. 68, NR. 1, PAGE(S) 1-11 XP000477611 ISSN: 0165-0114
- KELLER J M ET AL: "NEURAL NETWORK IMPLEMENTATION OF FUZZY LOGIC" , FUZZY SETS AND SYSTEMS,NL,ELSEVIER SCIENCE PUBLISHERS, AMSTERDAM, VOL. 45, NR. 1, PAGE(S) 1-12 XP000258448 ISSN: 0165-0114
- YAGER R R: "IMPLEMENTING FUZZY LOGIC CONTROLLERS USING A NEURAL NETWORK FRAMEWORK" , FUZZY SETS AND SYSTEMS,NL,ELSEVIER SCIENCE PUBLISHERS, AMSTERDAM, VOL. 48, NR. 1, PAGE(S) 53-64 XP000277795 ISSN: 0165-0114
- BUCKLEY J.J.; HAYASHI Y.: 'Hybrid Neural Nets Can Be Fuzzy Controllers And Fuzzy Expert Systems' FUZZY SETS AND SYSTEMS Bd. 60, Nr. 2, 01 Oktober 1992, AMSTERDAM, NETHERLANDS, Seiten 135 - 142, XP000405982

## Beschreibung

Die Erfindung betrifft den Nachweis der betrügerischen Verwendung von Kundenkonten und Kontonummern, einschließlich von zum Beispiel Geschäften mit Kreditkarten. Insbesondere betrifft die Erfindung ein automatisiertes Betrugsnachweissystem und ein Verfahren, das ein Vorhersagemodell zur Mustererkennung und Klassifizierung verwendet, um Geschäfte mit einer hohen Betrugswahrscheinlichkeit auszusondern.

In der folgenden Diskussion wird der Ausdruck "Kreditkarte" zu Zwecken der Anschaulichkeit verwendet; jedoch gelten die hier diskutierten Methoden und Grundlagen auch für andere Arten von elektronischen Zahlungssystemen, wie etwa Kundenkreditkarten, automatisierte maschinenlesbare Kassenkarten und Telefonkarten.

Seit jeher haben die Emittenden von Kreditkarten versucht, ihre Verluste durch Betrug zu begrenzen, indem die betrügerische Verwendung der Karte aufgezeigt wird, bevor der Karteninhaber eine verlorene oder gestohlene Karte gemeldet hat.

Ein wirksames Modell zum Betrugsnachweis sollte hohe Fangraten bei niedriger Verhinderung rechtmäßiger Transaktionen im Echtzeitbetrieb ergeben. Es sollte sich verändernden Betrugsmethoden und -muster anpassen können, und sollte eine integrierte Lernfähigkeit aufweisen, welche diese Anpassungsfähigkeit unterstützt.

Die vorveröffentlichte Druckschrift WO-A-8 906 398 beschreibt ein Element zur Analyse einer Transaktion mit einem regelbasierten System und einer Analyse vorhergehender Transaktionen; mittels Datenverarbeitung: indem nur diejenigen Daten herausgezogen werden, die zur Analyse der Transaktion nützlich sind; Signale gelöscht werden, die einer Transaktion entsprechen, von der man meint, daß sie auf einen Satz vorbestimmter Regeln paßt; gefiltert wird, damit nicht-signifikante Abwandlungen der zu analysierenden Transaktion beseitigt werden; und die Signale in eine oder mehrere Klassen, gemäß einem vorbestimmten Kriterium, eingeteilt werden. Dieses Element ist zur Anwendung für die Herausgabe von Zahlungsautorisierungen an Kreditkartennutzer geeignet.

Eine weitere Druckschrift, EP-A-0 418 144 beschreibt ein Verfahren zur Begrenzung der mit einer computergestützten Transaktion verbundenen Risiken, indem die Transaktionsanfrage mit vorbestimmten statistischen Daten verglichen wird, die als representativ zur Risikobewertung einer nicht gemäßen Verwendung erscheinen. Die statistischen Daten beschreiben die gemittelte Anzahl oder die Menge der während der Abfolge von aufeinanderfolgenden Zeitabschnitten getätigten Transaktionen, und werden abgeleitet, indem die Zeit in aufeinanderfolgende nicht gleiche Abschnitte eingeteilt wird, deren Dauern so gewählt sind, daß die Wahrscheinlichkeit einer getätigten Transaktion oder der gemittelte Betrag für jeden einzelnen Zeitabschnitt im wesentlichen gleich sind.

Aus der EP-0 669 032 sind ein auf einem Computer implementiertes Betrugsnachweisverfahren und eine entsprechende Hardware bekannt, welche Einrichtungen für Vorhersagemodelle einschließt. Aktuelle Transaktionsdaten werden empfangen und verarbeitet, was dann in einer Vielzahl von Ausgabewerten resultiert, die einen Trefferwert enthalten, der die Wahrscheinlichkeit für eine betrügerische Transaktion darstellt.

Dieses im Stand der Technik bekannte Verfahren erfordert mehrere Schritte, die vor den Verarbeitungsschritten für die aktuellen Daten durchgeführt werden müssen, nämlich:
- Erzeugen eines Benutzerprofils für jeden einzelnen einer Vielzahl von Benutzern aus einer Unmenge von Variablen bezüglich früheren Transaktionen und aus persönlichen Benutzerdaten, die für jeden Benutzer Werte aus einer Vielzahl von Benutzervariablen enthalten, wobei jedes Benutzerprofil ein Muster für die Tätigkeitshistorie eines Benutzers beschreibt;
- Ableitung von Variablen, die nachgewiesenen früheren Betrug betreffen, indem Daten früherer Transaktionen vorverarbeitet werden, wobei diese Werte für eine Vielzahl von Transaktionsvariablen für eine Vielzahl von früheren Transaktionen beinhalten;
- Trainieren von Einrichtungen für Vorhersagemodelle mit den Benutzerprofilen und mit den Variablen, die früheren Betrug betreffen, um ein Vorhersagemodell zu erhalten; und
- Speichern des erhaltenen Vorhersagemodells im Computer.

Dann erfolgt die Verarbeitung der aktuellen Daten, indem
- die aktuellen Transaktionsdaten für eine aktuelle Transaktion eines Benutzers empfangen werden;
- die Benutzerdaten, die den Benutzer betreffen, empfangen werden;
- das mit dem Benutzer verbundene Benutzerprofil empfangen wird;
- die erhaltenen aktuellen Transaktionsdaten, Benutzerdaten und Benutzerprofil vorverarbeitet werden, um für die aktuelle Transaktion Variablen bezüglich eines aktuellen Betruges abzuleiten;
- die Betrugswahrscheinlichkeit bei der aktuellen Transaktion bestimmt wird, indem das Vorhersagemodell auf die aktuellen betrugsbezogenen Variablen angewendet wird; und
- von den Einrichtungen für das Vorhersagemodell ein Ausgangssignal abgegeben wird, welches die Betrugswahrscheinlichkeit für die aktuelle Transaktion anzeigt.

Dieses System stützt sich auf ein neuronales Netz, um die Einrichtungen für das Vorhersagemodell zu trainieren. Dieses Training soll hauptsächlich die Einrichtungen für das Vorhersagemodell verändern, um die Verhinderung rechtmäßiger Transaktionen gering zu halten und die Leistung des Systems für den Betrugsnachweis zu verbessern.

Hierbei stützt sich das System auf einen Satz von festen (aber veränderbaren) Werten, die verschiedene Aspekte der Transaktion darstellen. Diese Werte werden in der Verarbeitung unterschiedlich gewichtet und eine wichtige Funktion des auf dem neuronalen Netz basierenden Trainings ist die Veränderung dieser Gewichtung, was in grundlegender Weise eine "Lern"-Fähigkeit für dieses System ergibt. Solche bekannten neuronalen Netze stellen eine Verknüpfung von "Neuronen" im Sinne einfacher mathematischer Übertragungsfunktionen dar. Um hier eine "Lernfähigkeit" zu erzeugen, wird ein entsprechender Algorithmus eingesetzt - z.B. gemäß EP 0 669 032 zur Anpassung der "Gewichte" bei der Datenbewertung im neuronalen Netz.

Bei alledem verwendet das System für die Kombination der verschiedenen Parameter und Daten gewöhnliche Logikalgorithmen und funktionelle Beziehungen, um den Trefferwert zu erhalten. Es führt für jede aktuelle Transaktion eine Berechnung durch, die auf herkömmlicher Logik basiert, betrachtet (später) das Ergebnis und verändert, wenn notwendig, den Algorithmus.

Buckley, J. et al., "Hybrid neural nets can be fuzzy controllers and fuzzy exped systems", Fuzzy Sets and Systems 60 (1993), 135-142, offenbart, dass für eingegebenes fuzzy Expertensystem ein hybrides, neuronales Netz aufgebaut werden kann, das einen Fuzzy-Erpertensystem entspricht.

Der Erfindung liegt die Aufgabe zugrunde, ein automatisiertes System zu schaffen, welches die verfügbaren Informationen z.B. über den Karteninhaber, Händler und Geschäfte verwendet, um Transaktionen zu prüfen und jene auszusondern, die wahrscheinlich betrügerisch sind, und dabei einen relativ höheren Anteil an Betrugsfällen bei einer relativ niedrigen Verhinderung rechtmäßiger Transaktionen auffinden kann. Ein solches System sollte vorzugsweise noch fähig sein, mit einer großen Zahl von voneinander abhängigen Variablen in einem schnellen Echtzeitbetrieb umzugehen, und sollte die Fähigkeit zur Rückentwicklung des zugrundeliegenden Systemmodells als neue Muster für auftauchendes Betrugsverhalten aufweisen.

Diese Aufgabe wird durch ein Computersystem und durch ein Verfahren und durch ein Computerprogrammprodukt mit den Merkmalen gemäß den unabhangigen Patentansprüchen gelöst.

Demgemäß schaft die Erfindung ein in einem Computer implementiertes Verfahren zur Identifizierung und Bestimmung von betrügerischen Transaktionsdaten

In mancher Hinsicht verwendet die Erfindung Merkmale, die aus der EP 0 669 032 bekannt sind.

Jedoch gibt es, wie aus der folgenden Beschreibung erkennbar, größere Unterschiede zwischen der Erfindung und diesem Stand der Technik, die sowohl in der grundlegenden Herangehensweise und der entsprechenden Grundstruktur, als auch in verschiedenen Einzelheiten der Datenerzeugung und -verarbeitung liegen.

Ein wesentlicher Unterschied ergibt sich daraus, daß die vorliegende Erfindung kein Benutzerprofil als Teil des Vorhersagemodells verwendet. Statt dessen arbeitet die Erfindung mit einer Kombination von einerseits Expertenregeln und andererseits einer Analyse vorausgegangener Benutzungsvorgänge des Zahlungsmittels, das für die aktuell zu bewertende Transaktion eingesetzt wird.

Bei den Expertenregeln handelt es sich, vergleichbar dem eingangs genannten Stand der Technik, um eine auf Erfahrungswerten, i.e. der Analyse früherer Mißbrauchsfälle, basierende Auswahl typischer Elemente einer individuellen Transaktion, die eine erhöhte Gefahr eines Mißbrauchs anzeigen. Relevant sind erfindungsgemäß insbesondere die Herkunft des Zahlungsmittels (zum Beispiel der Karte), die Branche und die Person des Empfängers der zu autorisierenden Zahlung und der Betrag der Zahlung.

Die Analyse vorausgegangener Benutzungsvorgänge desselben Zahlungsmittels umfaßt die jüngsten Vorgänge, etwa die letzten fünf bis zwanzig Transaktionen (könnte sich aber auch weiter zurück erstrecken).

Im Gegensatz zum Stand der Technik, zum Beispiel gemäß EP 0 669 032, verwendet die Erfindung vorzugsweise kein herkömmliches neuronales Netz, kombiniert mit einem Lernalgorithmus.

Die Erfindung verwendet Fuzzy Logik zur Feststellung, ob eine bestimmte Transaktion als betrügerisch zu erachten ist.

Im erfindungsgemäß bevorzugten Entscheidungssystem werden sowohl die Expertenregeln als auch dem neuronalen Netz im Stand der Technik funktional entsprechenden Regeln für die deskriptive Statistik als Fuzzy-Regeln abgespeichert, und unterscheiden sich damit nicht in der Berechnungsart, jedoch in der Gewinnungsart.

Das Expertenwissen ist direkt als Fuzzy-Regeln formuliert. Diese definieren für jede Transkationsart ein Limit, das der (benutzerspezifischen) "Risikobereitschaft" entspricht.

Die Information aus der Benutzungshistorie des Zahlungsmittels wird mit Hilfe eines "NeuroFuzzy-Moduls" ebenfalls in Fuzzy-Regeln transformiert. Das NeuroFuzzy Modul verwendet eine Modifikation desjenigen Trainingsalgorithmus, der auch bei den meisten neuronalen Netzen verwendet wird, nämlich den Error Backpropagation Algorithmus, der weithin in der Literatur beschrieben ist. Da in dieser Weise die Information aus den Vergangenheitsdaten (also das was zum Beispiel gemäß EP 0 669 032 in den Gewichten des trainierten neuronalen Netzes abgespeichert wird) als lesbare und interpretier-/modifizierbare Fuzzy-Regeln zur Verfügung steht, sind diese in jeder Weise ergänz-, verifizier- und erweiterbar. Hinsichtlich der Eingangs- und Ausgangsdaten können die "neuronal" erzeugten Fuzzy-Regeln die gleichen Größen verwenden wie die Expertenregeln.

Die "neuronal" erzeugten Fuzzy-Regeln beruhen vorzugsweise auf einer Analyse vorausgegangener Transaktionen hinsichtlich solcher Faktoren wie dem durchschnittlichen Betrag der Transaktion, dem Anteil von Barauszahlungen, dem Anteil von Auslandseinsätzen, von Reisekostennutzungen, dem früheren Auftreten von Verdachtsfällen usw. und hinsichtlich "dynamischer" Kriterien wie etwa der aktuellen Ausschöpfung des Limits der betroffenen Kreditkarte. Das Ergebnis dieser Analyse wird auch als "Zeitreihe" bezeichnet. Dieses Regelsystem ermittelt so für jede Transaktion ein dynamisches Risiko in Form eines "Bonus" bzw. "Malus".

Die Erfindung gestattet so die Verschmelzung statistischer Modelle mit Expertenwissen. Statt, wie beim Stand der Technik, für jeden Vorgang einfach eine Betrugswahrscheinlichkeit auszurechnen, wird das für jede Transaktionsart definierte Limit gleitend mit dem dynamischen Risiko ("Bonus" oder "Malus") der spezifischen aktuellen Transaktion zu einem (gleitenden) Transaktionslimit kombiniert.

Dies ermöglicht unterschiedliche, differenzierte Behandlungen "auffälliger" Transaktionen, z.B. die sofortige Sperre oder statt dessen die Verweisung zur individuellen Überprüfung, z.B. durch einen Sachbearbeiter.

Im Stand der Technik wird eine Transaktion, die oberhalb der berechneten Risikoschwelle liegt, normalerweise gesperrt; der Stand der Technik kennt grundsätzlich nur Freigabe oder Sperre als Ergebnis der Überprüfung. Die Erfindung ermöglicht statt dessen abgestufte Reaktionen; beispielsweise kann ein Verdachtsfall generiert werden (und damit in die "Zeitreihe" für diese Kreditkarte eingehen, die für zukünftige Transaktionen herangezogen wird), obwohl die aktuelle Transaktion autorisiert wird. Bei stärkerem Verdacht würde eine Nachprüfung (referral) der aktuellen Transaktion (vor deren eventuellen Freigabe) ausgelöst; bei noch stärkerem Verdacht würde die Transaktion verweigert (decline).

Wesentliche Unterschiede zum Stand der Technik ergeben sich auch hinsichtlich der Modellbildung, also der Generierung und Erkennung von Mißbrauchsmustern (Fraudmustern).

Der Stand der Technik basiert auf "passiver Datengewinnung". Mit anderen Worten, ausschließlich bereits vorhandene Vergangenheitsdaten werden zur Modellbildung herangezogen. Das bedeutet, um im Modell überhaupt ein Fraudmuster erkennen zu können, muß (a) bereits genug Zeit verstrichen sein, damit die Fraudmeldungen bereits zurückgekommen sind (meist erst, nachdem die Kunden ihren Auszug gelesen haben), (b) müssen genug Fälle für ein sicheres Training vorhanden sein (nur so funktioniert ein neuronales Netz / es gibt Fraudfälle, die sehr selten sind, aber einen hohen Einzelschaden ausmachen, die sind so nur sehr schwer im Modell zu erfassen, © erst nach einem aufwendigen manuellen Retraining ist eine Immunisierung des Autorisierungsbetriebes überhaupt möglich.

Hingegen ist die Datengewinnung erfindungsgemäß "aktiv". Tauchen die ersten Verdachtsmomente eines neuen Fraudmusters auf, so werden Regeln definiert, die sofort eine Nachrecherchierung genau dieser Fälle durch aktive Kontaktierung der Kunden auslösen. So stehen im Idealfall innerhalb weniger Stunden viele gesicherte Daten darüber zur Verfügung, ob hier tatsächlich ein neues Fraudmuster aufgetaucht ist, und wie es sich von anderen Mustern abgrenzt. Diese Analyse läßt sich (egal mit welchem Verfahren) nämlich erst durchführen, wenn genug gesicherte Daten vorhanden sind.

Die Methodik der Modell-Erstellung im Stand der Technik führt dazu, daß die Erfahrung menschlicher Analysten zu wenig genutzt werden kann und Erwartungen über zukünftige Fraudmuster nicht Eingang finden können. Im Stand der Technik bildet das neuronale Netz praktisch eine "black box" festgelegter, starrer Kriterien, die nur noch "automatisch", also als Ergebnis wiederum vorher festgelegter Algorithmen, hinsichtlich der "Gewichte" modifiziert werden. Soweit überhaupt Expertenregeln zusammen mit neuronalen Netzen eingesetzt werden, laufen neuronales Netz und Expertenregeln unabhängig nebeneinander. Durch den NeuroFuzzy-Ansatz ist das mit Daten trainierte prädiktive Modell keine black box mehr, sondern wird in Form von Fuzzy-Regeln erzeugt. Diese sind direkt von Experten interpretierbar und modifizierbar.

Die erfindungsgemäßen gleitenden Transaktionslimits erlauben eine wirkungsvolle Kombination von "hard facts" und "soft facts". Dies ermöglicht eine Modellierung der "soft" und "hard" facts in konsistenter und kooperativer Weise. Bei dem "black-box"-Ansatz im Stand der Technik ist das nicht wichtig, denn dort findet keine wissensbasierte Modellierung statt. Bei der Erfindung, die es ermöglicht und vorzugsweise auch vorsieht, daß automatische Modellbildung und menschliche Expertise im laufenden Betrieb kombiniert werden, ist dies sehr relevant.

Im folgenden wird die Erfindung an einem Ausführungsbeispiel näher erläutert, welches gegenwärtig besonders bevorzugte Ausgestaltungen des erfindungsgemäßen Grundprinzips umfaßt.

Das Ausführungsbeispiel betrifft ein Autorisierungssystem für Kreditkarten-Transaktionen und damit eine Grundkonstellation ähnlich der im eingangs behandelten Stand der Technik. Aus einem vorhandenen Netzwerk, das Nutzungsstellen für die im System benutzbaren Kreditkarten umfaßt, kommen Autorisierungsanfragen, die in Echtzeit bearbeitet und beantwortet werden müssen.

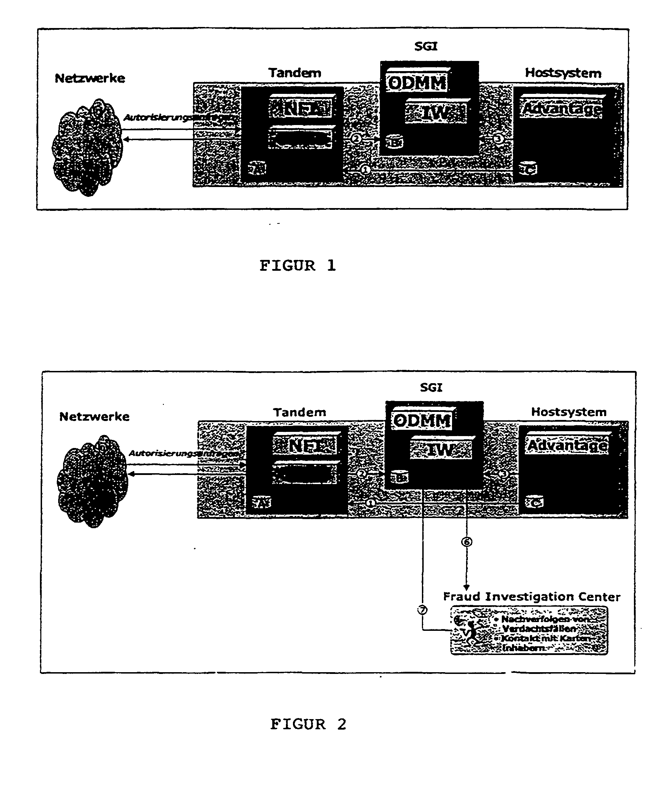

Die Bearbeitung der Autorisierungsanfragen erfolgt im erfindungsgemäß ausgestalteten Autorisierungssystem, das schematisch in den Figuren 1 bis 4 gezeigt ist.

Das System umfaßt im Ausführungsbeispiel mehrere Rechner, kann aber natürlich auch auf einem Zentralrechner oder mittels eines Rechner-Netzwerks realisiert werden.

Im Beispiel umfaßt das System einen "Tandem"-Rechner mit einer Datenbank A, einen "SGI"-Server (SQL-Server) mit einer Datenbank B und ein "Hostsystem" mit einer Datenbank C.

Auf dem Tandem-Rechner ist eine Software implementiert, die für Datenübergaben, Data Preprocessing (Kriterien-Ableitung), Zeitreihenberechnungen und -aktualisierungen etc. dient, wie später noch deutlich werden wird. Weiterhin ist auf dem Tandem-Rechner die erfindungsgemäße Entscheidungslogik implementiert, die Fuzzy-Expertenregeln und Neuro-Fuzzy-Modelle umfaßt und die Entscheidung über die Autorisierungsanfragen trifft. Die auf dem Tandem-Rechner implementierte Software wird im folgenden zusammenfassend als "NeuroFuzzy Inferenzmaschine" (NFI) bezeichnet.

Der SGI-Server dient, gegebenenfalls zusammen mit einer entsprechenden Zahl von PC-Clients, insbesondere zur Implementierung der Software für den "Investigation Workflow" (IW) für die Nachbearbeitung von Verdachtsfällen, und für das "Online Data Mining Module" (ODMM), wie später noch erläutert werden wird.

Das Hostsystem enthält und erhält die wesentlichen historischen wie aktuellen Daten zu Zahlungsmittel und Nutzer, die für die Bearbeitung der Autorisierungsanfragen benötigt werden.

Figur 1 zeigt den grundsätzlichen Informationsaustausch wie folgt:

Das Autorisierungssystem erlangt Daten (1) für ein Cardholder File aus der Datenbank [C] des Hostsystems. Bei einer Änderung der Daten des Cardholder Files werden nur die für die Autorisierung relevanten Daten einer Kartennummer auf das Autorisierungssystem überspielt. Ereignisse wie Kartensperrungen mit einer hohen Priorität werden sofort übertragen, andere mit einer kleineren Priorität erst wesentlich später. Der Datentransfer (Update) erfolgt stündlich.

Der SGI-Server erhält (2) über das bestehende Netzwerk vom Tandem-Autorisierungsrechner die Autorisierungsanfragen, versehen mit der von NFI ausgelösten Aktion (diese besteht aus: Fallwichtigkeit, Fallklasse, Fallschwelle, Referralentscheidung, Risko-Score, Limit und Action Code) sowie die aktuelle Zeitreiheninformation. (Die hierfür erforderlichen Echtzeitanforderungen liegen im Bereich von Minuten. Die Gesamtinformation zu einer Autorisierungsanfrage wird von der NFI zu einer Nachricht komprimiert, die dann an den SGI-Server übertragen wird.)

Weiter erhält der SGI-Server vom Hostsystem alle Postinginformationen, Mißbrauchsinformationen und gegebenenfalls Karteninhaberstammdaten, die nicht aus der Cardholder File extrahiert werden können (3). Die Datenbank des SGI-Servers [B] speichert diese Daten je nach Speicherausbau so lange wie erforderlich. Der SGI-Server beherbergt die Serverkomponente sei es des Supervisory Workflow (ODMM) als auch des Investigation Workflow (IW).

Figur 2 zeigt den Datenfluß bei vermuteten bzw. erkannten Mißbrauchsfällen.

Der Investigation Workflow (IW) (6) dient der Bearbeitung der erkannten und vermuteten Fraudfälle, insbesondere durch Mitarbeiter (Call-Center).

Im Call-Center wird festgestellt, ob es sich bei den vermuteten Mißbrauchsfällen um tatsächliche Mißbrauchsfälle handelt. Es erfolgt eine entsprechende Mitteilung (7) an den SGI-Server.

Neben dieser ersten Hauptaufgabe erfüllt der SGI-Server noch eine weitere Hauptaufgabe:

Die Datenbank des SGI-Servers speichert die für das Entdecken neuer Fraudmuster erforderlichen Daten und bereitet diese für eine Analyse durch das Online Data Mining Modul (ODMM) auf. Hierfür werden die mißbrauchsrelevanten Daten in der Datenbank [B] zwischengespeichert. Im Fraud Supervisory Center werden dann mittels dieser Informationen (4) neue Fraudregeln definiert und die vorhandenen Fraudregeln werden kontinuierlich auf ihre Wirksamkeit hin überprüft.

Die entsprechend modifizierten Fraudregeln in Form einer Datei werden vom Fraud Supervisory Center auf den Autorisierungsrechner übertragen (5). Hierzu wird vom PC aus die Datei auf den SGI-Server gebracht. Auf dem SGI-Server wird ein automatischer Job installiert, der erkennt, wenn der Timestamp der Datei sich geändert hat, und in diesem Falle einen Austausch der Datei auf der Tandem vornimmt, als auch der NFI mitteilt, daß es diese Datei neu einlesen muß.

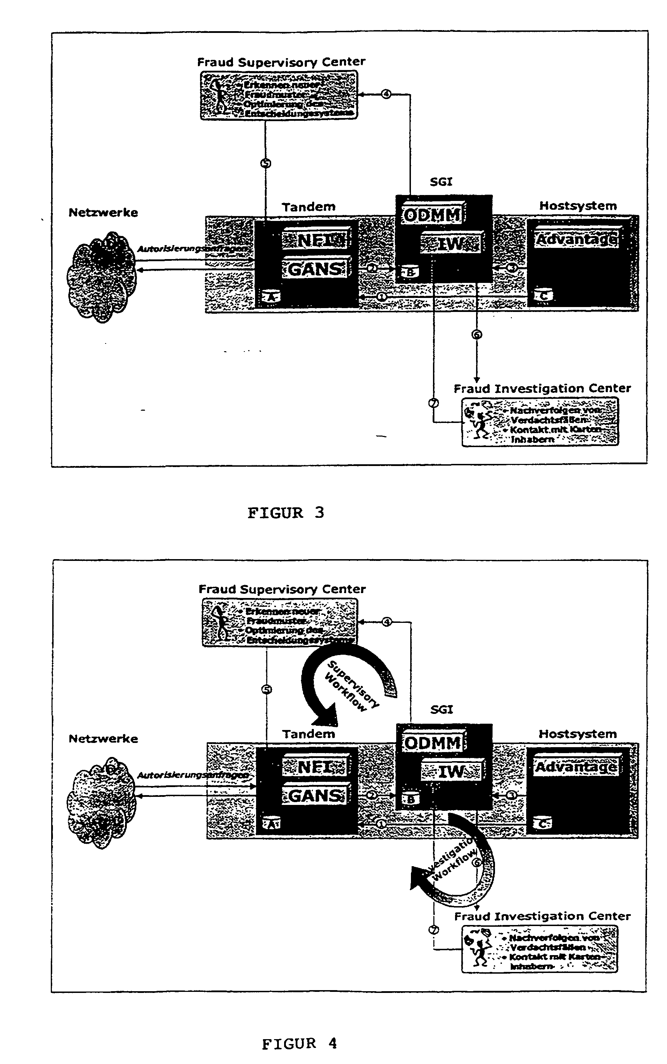

Es ergeben sich somit insgesamt zwei Workflows (Figur 4):
1. Der Supervisory Workflow ODMM paßt die Entscheidungsstrategie des Präventionssystems kontinuierlich an die sich ändernden Mißbrauchsmuster an.
2. Der Investigation Workflow IW kontrolliert die Entscheidungen des Präventionssystems durch Einzelbearbeitung der gemeldeten und vermuteten Mißbrauchsfälle.

Beide Workflows sind indirekt über die (mittlere) operative EDV-Ebene verbunden. Wird im Supervisory Workflow die Entscheidungsstrategie modifiziert, so werden vom Präventionssystem andere Referrals generiert, die im Investigation Workflow nachrecherchiert werden.

Nicht vom Präventionssystem rechtzeitig erkannter Mißbrauch sowie fälschlicher Mißbrauchsverdacht wird vom Investigation Workflow verifiziert und in der Datenbank des SGI-Servers abgelegt. Hierauf greift das Online Data Mining Modul (ODMM) zu und schlägt den Fraudexperten im Fraud Supervisory Center entsprechende Modifikationen der Entscheidungsstrategie vor.

Die gesamte Berechnung, also der Fluß der Fuzzy-Inferenz durch das Regelwerk, sowie die gesamte Profilbildung und -initialisierung, wird von der NFI selbst übernommen; es ist keine externe Steuerung erforderlich. Die Schnittstelle enthält weitere Funktionen zur Initialisierung und Konfiguration der Entscheidungslogik (diese Funktionen müssen einmal beim Laden des Präventionsmoduls aufgerufen werden), die aber nicht pro Autorisierungsanfrage aufgerufen werden müssen.

Die SQL-Datenbank des Autorisierungsrechners (Cardholder File) wird um ein Feld "Zeitreihe" ergänzt. Dieses Feld speichert die letzten Autorisierungsanfragen zu dieser Kartennummer (Nutzungsprofil) in komprimierter Form ab. Wenn eine Autorisierungsanfrage in das System kommt, wird der komplette Datensatz der Karte aus der Datenbank geladen. Hier muß nun zusätzlich noch das Binärobjekt "Zeitreihe" aus der Datenbank geladen und dem NFI zugeführt werden. Das Binärobjekt Kartennutzungsprofil wird in einer stark komprimierten Form erzeugt, so daß es in Form eines String in der SQL-Datenbank effizient für den Echtzeitzugriff gespeichert werden kann. Zusätzliche Rechenzeit durch das Auslesen und Wiedereinspeichern des Kartenprofils bei jeder Autorisierungsanfrage wird keinen spürbaren Rechenaufwand bedingen, da der Datensatz einer Karte sowieso bei jeder Autorisierungsanfrage ausgelesen wird. Nach der Entscheidung aktualisiert das NFI die Zeitreihe um die jetzt gerade eingegangene Autorisierung. Genau wie die durch die Autorisierung aktualisierten Limits muß auch die aktualisierte Zeitreihe wieder in die Datenbank zurückgeschrieben werden.

Weiterhin wird die Cardholder File ergänzt um zwei Datumsfelder, je eines für "kein Referral bis" (Dieses Feld wird bei einem positiv beantworteten Referral gesetzt, um sicherzustellen, daß nicht sofort nach einer positiven ID des Karteninhabers dieser bei der nächsten Transaktion direkt wieder einen Referral erhält) und eines für "Kurzreferral bis" (bei akutem Verdacht wird dieses Datum gesetzt, um bis zu diesem Datum bei jeder Autorisierungsanfrage einen Referral zwangsweise zu erzeugen.). Diese Felder werden über das Autorisierungssystem gesetzt oder zurückgesetzt. Die Daten werden vom Autorisierungssystem an die NFI übergeben, die NFI wertet die Daten aus und entscheided, ob ein Referral oder Decline, und gegebenenfalls ein Fall generiert werden soll. Da die NFI gegebenenfalls auch mandantenabhängige Regeln enthält, muß die NFI den Mandanten aus der Kartenummer erkennen. (Mandant ist z.B. der Kunde der Processingfirma, für welchen das Fraudprocessing durchgeführt wird)

Die Entwicklungskomponente ist Bestandteil des Supervisory Workflow und eine grafische Entwicklungs- und Analysesoftware, die auf Windows/NT Workstations (Clients) installiert wird. Hierbei kann es sich um vorhandene Rechner handeln, der auch für andere Aufgaben genutzt wird, oder es kann ein eigener Rechner bereitgestellt werden.

Von der Entwicklungssoftware aus kann der Entwickler das Fuzzy-Entscheidungssystem der Tandem modifizieren. Hierbei wird in keinem Fall der laufende Autorisierungsprozeß gestoppt, gestört oder verlangsamt.

Werden neue Betrugsprofile bekannt, so erlaubt die Entwicklungskomponente, diese durch Modifikation bekannter und Definition neuer Regeln zu berücksichtigen. Dabei werden diese neuen Regeln und modifizierten Regeln in die NFI übertragen, wo sich die neuen Regeln augenblicklich auf das Autorisierungsverhalten auswirken.

Alle Autorisierungsanfragen werden von der Tandem über TCP/IP an den SGI-Server übergeben. Der SGI-Server legt für jede Autorisierungsanfrage einen neuen Record an und füllt diesen mit allen erforderlichen Information.

Liegt die Fallwichtigkeit einer Autorisierungsanfrage über der Fallschwelle, so legt der SGI-Server zusätzlich einen Fall an. Ein Fall besteht aus einem Eintrag in der Falltabelle und den hierzu gehörigen Untertabellen.

### Zusammengefaßt:

Jede von der Tandem eingehende Message beschreibt eine Autorisierungsanfrage.

Für jede Autorisierungsanfrage wird ein Record angelegt.

Die Fallerzeugung ist von den Referrals unabhängig, d.h. es kann ein Fall erzeugt werden, ohne daß ein Referral erzeugt wurde und es kann ein Referral erzeugt werden ohne daß ein Fall erzeugt wird.

Diese Schnittstelle ist auf Seiten der SGI-Server erstellt. Die Erzeugung der entsprechenden Einträge in den Tabellen des SGI-Servers ebenfalls.

Zur Nachbearbeitung der möglichen Betrugsfälle und Referrals dient der Investigation Workflow. Hierbei wird für die Fallsortierung die von der NFI ermittelte Fallwichtigkeit zugrundegelegt. Ob oder ob nicht für diese Autorisierungsanfrage ein Referral generiert wurde, ist für die Generierung eines Falles unerheblich. Die Fallgenerierung arbeitet mit einer eigenen Entscheidungslogik, die auch Regeln abweichend von den Betrugsregeln enthalten kann. Hierdurch lassen sich Präventionsstrategien sozusagen "erstmal im Trockenen" ausprobieren. Damit können im Investigation Workflow auch solche Fälle nachverfolgt werden, bei denen der Verdacht nicht für eine Referralgenerierung ausgereicht hat.

### Komprimierte Speicherung der Autorisierungshistorie ("Zeitreihe")

Die NFI arbeitet mit neuronalen Modellen, die auf der Analyse früherer Transaktionen beruhen.

Problem einer solchen Analyse ist, daß während der Bearbeitung einer Autorisierungsanfrage keine Abfrage und Analyse vergangener Transaktionen in Echtzeit möglich ist. Daher muß die NFI eine Kurzhistorie in einem Ringpuffer Zwischenspeichern. (Ein Ringpuffer ist ein Speicher mit einer festen Anzahl von Plätzen, die hintereinander geschaltet sind. Jedes neu gespeicherte Objekt wird "vorne" in den Ringpuffer hineingeschoben, was alle bereits im Ringpuffer befindlichen Objekte je eine Position weiterschiebt. Das Objekt auf dem letzten Platz fällt dabei völlig aus dem Ringpuffer heraus.) Besonders wichtig ist hier, daß diese Zeitreihe so wenig Speicherplatz wie möglich erfordert (jedes Byte pro Karte ergibt einen Nettospeicherplatzbedarf von ungefähr 7 Megabyte in der Datenbank des Autorisierungsrechners), und so schnell und effizient wie möglich gelesen und geschrieben werden kann.

Aus diesem Grunde basiert die Zeitreihenbildung auf einem Algorithmus, der diesen Ringpuffer so erzeugt und aktualisiert, daß dieser effizient zu speichern und zu berechnen ist. Zur Speicherung wird eine komprimierte Speicherung im umgewandelten Ganzzahlformat verwendet.

Die Zeitreiheninformation stellt dabei z.B. eine verdichtete Historie der letzten 15 Autorisierungsanfragen dar, die eine Berechnung von dynamischen Kriterien (Ausschöpfung, Panik, Tankstellennutzung,...) ermöglicht. Die Zeitreiheninformation erlaubt zudem die Ermittlung von aggregierten Größen wie: Durchschnittliche Einkaufshöhe, Anteil Cashing, Anteil Ausland, Anteil Reisekostennutzung, wann wurde zum letzten Mal ein Referral ausgesprochen und wann wurde zum letzten Mal ein Referral beantwortet.

Da die Zeitreiheninformation 15 mal (für jede Autorisierungsanfrage im Ringpuffer) abgespeichert werden muß, ist hier eine Komprimierung der Information besonders wichtig.

Da in der Datenbank das Profil als Binärobjekt (Stringformat) abgespeichert wird, können die einzelnen Teilinformationen jeder Transaktion im Ringpuffer als Ganzzahlen beliebiger Bitlänge codiert werden. Es wurde allerdings eine sinnvolle Aufteilung einzelner Bitlängen auf die Bytes des Stringformats gewählt, damit die Berechnung und Aktualisierung der Profile nicht zu rechenaufwendig wird. Hierdurch ist nicht immer "auf Bit genau" die kürzestmögliche Speicherform gewählt, sondern es ergibt sich ein Kompromiß aus Speicherplatzbedarfminimierung und Rechenperformancemaximierung.

Zu den gespeicherten Feldern im einzelnen:

### - Datum

Die Abspeicherung des Datums im Minutenformat ermöglicht das einfache Berechnen von Zeitdifferenzen im Ganzzahlarithmetik einer 16-bit Zahl (mit 16-Bit Minutenauflösung lassen sich maximal 45 Tage darstellen, was für die Berechnung von Zeitdifferenzen im Profil ausreicht).

Die bei Subtraktionen solcher Minutenwerte resultierenden 16-Bit Werte für die Zeitdifferenzen werden direkt ohne rechenaufwendige Umskalierungen als Eingangsgrößen der NFI verwendet.

Mit der maximalen Speicherlänge des Minutendatums nach Stichtag von 24 Bit muß allerdings ein Reset der Profilinformationen alle 31 Jahre erfolgen.

Ist dieser Eintrag "Datum" gleich "0", so bedeutet das, daß dieser Eintrag im Ringpuffer noch nicht verwendet ist.

### - Betrag

Muß durch 10 dividiert werden, um den Euro-Betrag zu ergeben. Hierdurch ergibt sich eine optimierte Ausschöpfung des 20 bit Zahlenbereiches. Betragsabweichungen unter Euro 0,10 sind für die Mißbrauchsprävention unerheblich, und der maximale darstellbare Betrag von über Euro 100.000,00 ist auch ausreichend. Angefragte Werte über Euro 100.000,00 werden auf Euro 100.000,00 im Ringpuffer abgeschnitten.

### - MCC

Enthält den Branchencodes des Vertragspartners, der die Autorisierung angefragt hat.

### ICA

Beschreibt alle Issues anhand ihrer ICA-Nummern.

### Country Code

Für die Zeitreihenbetrachtungen reicht der Country Code zur Herkunftsbestimmung aus. Dieser ist maximal dreistellig, daher reichen 10 bit zur Darstellung aus (nach MC Quick Reference Booklet, Oktober 97).

### - POS

Nimmt die 5 möglichen POS Entry Modes auf. Zwar würden 3 bit ausreichen, um die 5 möglichen POS Entry Modes darzustellen, doch bietet die Darstellung in 4 bit rechnerische Vorteile.

### - Status

Status beschreibt beispielsweise, ob das Verfallsdatum falsch war, oder ob ein CVC Problem aufgetreten ist, etc.. (Auf der Magnetkarte ist die Kartennummer um einen dreistelligen Code (CVC-1) erweitert. Dieser dreistellige Code ist nicht errechenbar.

Damit ist über diese Prüfung eine recht gute Identifikation einer echten Karte möglich.) Hierdurch ist gewährleistet, daß auch nichtautorisierte Anfragen in dem Profil berücksichtigt werden können.

### Fraud Supervisory Workflow

Der Fraud Supervisory Workflow umfaßt alle Werkzeuge, die verwendet werden, um die Entscheidungslogik zu kontrollieren und zu warten. Im einzelnen sind dies die Module:

### - Online Data Mining Modul

Zur systematischen Erkennung neuer Mißbrauchsmuster, sowie zur kontinuierlichen Prüfung der Treffsicherheit aktuell definierter Entscheidungsregeln.

### - Entscheidungslogik

In diesem Modul werden die Entscheidungskomponenten entwickelt, überwacht und gesteuert.

### - Analyse-NFI

Die Analyse-NFI dient dem Test neuer Entscheidungslogiken an Vergangenheitsszenarien.

### Online Data Mining Modul (ODMM)

Das Online Data Mining Modul besteht sowohl aus einer Serverkomponente auf dem SQL-Server als auch aus einer Clientkomponente auf PC. Die Clientkomponente arbeitet mit dem Server über Pass-Through Queries und verknüpfte Tabellen zusammen.

Das ODMM arbeitet mit den Tabellen, in denen die für die Analysen erforderlichen Autorisierungsanfragen und Fälle abgelegt sind.

Der ODMM Client erhält folgende Informationen zu jeder Transaktion:
- Kartennummer (Zusammen mit Datum und Zeit der Transaktion dient diese Information der eindeutigen Zuordnung jeder Transaktion (Schlüssel). Da zu einer Transaktion mehrere Ereignisse (zum Beispiel mehrere Autorisierungsanfragen, Mißbrauchsmeldungen, beantwortete Referrals, etc.) gehören können, die zu unterschiedlichen Zeiten stattfinden können, wird hier immer das früheste Datum eingesetzt. Dies entspricht der Logik, daß die zu dieser Transaktion gehörenden Ereignisse sich alle auf den ersten Zahlungswunsch beziehen, der im System bekannt geworden ist.
- Datum und Zeit der Transaktion
- Betrag in Euro
- Typ der Transaktion (autorisierte oder nichtautorisierte Transaktion; bei nichtautorisierten Transaktionen liegt beispielsweise keine Autorisierungsanfrage vor, jedoch kann beispielsweise ein Posting und eine Mißbrauchsmeldung vorliegen)
- Mißbrauch (ist Mißbrauch aufgetreten?)
- Referral (ist ein Referral generiert worden, wenn ja, wie beantwortet)
- Informationen aus der Autorisierungsanfrage oder dem Posting (Branchencode, Country Code Herkunft, POS Entry)
- Zufallszahl (Auswahl einer Stichprobenmenge)

Die Tabellen, die diese Informationen liefern, werden von den ODMM Clients über Pass Through Queries abgefragt.

Der Server ordnet im Nachhinein eintreffende Mißbrauchsmeldungen zu bereits in der Tabelle TRX eingetragenen Transaktionen zu. Ebenfalls werden die Ergebnisse für die statistische Komponente aktualisiert.

### - Rasterfahndung

Die Rasterfahndung läuft als Pass-Through Query auf dem Server und generiert eine Tabelle mit Regeln, die aktuell nicht aktiviert sind und von denen es sinnvoll wäre, sie aufzunehmen. Jeder Regel ist eine Mißbrauchssumme zugeordnet, die im Untersuchungszeitraum hätte verhindert werden können, wenn diese Regel aktiv gewesen wäre. Um diese Aussage zu verifizieren, enthält jede Regel auch das Verhältnis fälschlich zu gerechtfertigt abgelehnter Autorisierungsanfragen (F/P-Rate), die Anzahl gerechtfertigter und die Anzahl nicht gerechtfertigter Referrals, welche die Beurteilung zur Aufnahme oder Ablehnung der Regel ermöglichen. Es ist möglich, die Regeln vorweg durch Angabe eines bestimmten Mißbrauchsbetrags und F/P-Rate zu filtern. Bei kleineren Summen oder höheren F/P-Raten werden die gefundenen Regeln ausgeblendet. Auch die Gewichtung zwischen der Mißbrauchssumme und der F/P-Rate kann bei der Sortierung eingestellt werden. Damit kann bei jeder Rasterfahndung erneut festgelegt werden, wie bedeutend jede der beiden Größen für die Untersuchung sein soll.

### - Regeloptimierung

Die negativ beantworteten Referrals, die keinen Mißbrauch bestätigen konnten, dienen der Empfehlung zur Deaktivierung von Regeln als Grundlage. Wird ein Referral negativ beantwortet, so wird der dazugehörige Datensatz nicht mehr als Mißbrauch, sondern als gute Transaktion in die Analyse einfließen. Sollte sich dann herausstellen, daß die Regel nicht genug Mißbrauch verhindert hat und zu viele gute Transaktionen verhindert hat, so wird sie zur Deaktivierung vorgeschlagen. Auch in dieser Analyse kann die Gewichtung zwischen der Mißbrauchssumme und der F/P-Rate eingestellt werden. Damit kann auch hier bei jeder Rasterfahndung erneut festgelegt werden, wie bedeutend jede der beiden Größen für die Untersuchung sein soll.

### Entscheidungslogik

Der Zugriff auf die Entscheidungslogik erfolgt über den Fraud Supervisory Workflow:

Der Block "Fraud Supervisory Workflow" stellt die PC-Netzwerke im Stab-SI dar. Diese verwalten beliebig viele Entscheidungslogiken, sei es zur Archivierung als auch als Zwischenstände der Entwicklung. (Die eigentlichen Daten für die Entscheidungslogiken werden zentral auf dem SGI-Server gespeichert, so daß alle Fraud-Analysten hierauf Zugriff haben. Der Zugriff auf diese Entscheidungslogiken erfolgt durch die PC mit der "Fraud Supervisory Workflow" Software.) Jede der Entscheidungslogiken besteht aus den drei Komponenten Listen, Zeitreihe und Regeln. Durch Druck auf die jeweilige Taste öffnen sich die entsprechenden Editoren für die Komponenten.

Im Produktivbetrieb läuft immer die Entscheidungslogik "Betrieb". Durch Druck der Taste [übertragen] wird die aktuell im PC entwickelte Entscheidungslogik "Betrieb" auf die Tandem übertragen und aktiviert.

Auf dem SGI-Server laufen beide Entscheidungslogiken für die Szenarienanalyse. Durch Druck der Taste [übertragen] wird die aktuell im PC entwickelte Entscheidungslogik "Test" auf die SGI-Server übertragen und aktiviert.

### Vorgehensweise bei der Entwicklung

Die grundsätzliche Vorgehensweise bei der Entwicklung von Entscheidungslogiken ist die folgende. Auf dem Autorisierungsrechner läuft die Entscheidungslogik "Betrieb". Durch Drücken der Taste [übertragen] wird die Entscheidungslogik "Test" mit der Entscheidungslogik "Betrieb" überschrieben. (Hierbei handelt es sich nicht um ein physikalisches Überschreiben von der Tandem auf die SGI-Server. Die SGI-Server verfügen ebenfalls über eine Kopie der Entscheidungslogik, wodurch das Überschreiben direkt auf den SGI-Servern ausgeführt wird.)

Hierdurch kann nun die Entscheidungslogik "Test" auf dem PC modifiziert werden und mit Hilfe der Analyse-NFI erfolgt der Test von Modifikationen durch direkten Vergleich des "Test"-Systems mit dem "Betriebs"-System.

Sind die an der Entscheidungslogik "Test" durchgeführten Modifikationen erfolgreich, so wird durch Drücken der Taste [übertragen] die Entscheidungslogik "Test" mit der Entscheidungslogik "Betrieb" überschrieben. Nachdem die neue Entscheidungslogik in Betrieb gegangen ist, fängt die Vorgehensweise erneut an.

Jede neue Transaktion wird von der NFI-Maschine mit einer Fallwürdigkeitsbeurteilung versehen. Ein Hilfsmodul kennzeichnet eine Transaktion als Fall, wenn sie ein Fallkriterium erfüllt (MCC, ICA, CNT, POS, Betragsklasse, Fallwürdigkeit).

Wie weit die Historie der Transaktionen und Postings eines Vorgangs zurückgeht, kann wahlweise bestimmt werden. Als sinnvoll wird ein Zeitraum von 4-6 Wochen erachtet.

Gehört eine Transaktion zu einer Kategorie aller möglichen Fälle, so wird ein neuer Record in der Investigation Workflow eigenen Tabelle angelegt. Dieser Record enthält folgende Einzelinformationen:
- Kartennummer
- Transaktionsdaten (Datum/Uhrzeit, MCC, CNT, ICA, POS, Betrag,)
- Fallstatus (ist der Fall neu oder wurde er abgeschlossen)
- Fallwichtigkeit (die Fallwichtigkeit FW stellt den NFI-Score dar)
- Fallklasse (Die Fallklasse gibt an, warum eine Transaktion zu einem Nachbearbeitungsfall geworden ist bzw. zu welcher Kategorie die Transaktion gehört. Die Kennung beinhaltet folglich Angaben über MCC, ICA, CNT, POS, Betragsklasse, FW.)
- Benutzername
- Wiedervorlagedatum
- Close-Status (Der Close-Status eines Falls gibt Auskunft über das Ergebnis der Bearbeitung nach Schließen des Falls und kann folgende Information enthalten: "Kein Betrug" oder "kein Betrug geschätzt", "Betrugsbestätigung unmöglich" oder "Betrug" oder "Betrug geschätzt".)

Die Kartennummer ist das Bindeglied (Zeiger) zu den vergangenen Transaktionen mit derselben Kartennummer auf dem DBMS des SGI-Servers. Zusammen mit den Stammdaten der Kartennummer sind alle Daten für den Fraud Investigation Workflow vollständig.

### Eingangsgrößen der NFI

Die NFI wird über ein Tokenprotokoll in den Ablauf der Autorisierung integriert. Hieraus entnimmt die NFI alle Eingangsgrößen sowie die Zeitreihe als Binärdatenobjekt (String).

Als Sonderform der Autorisierungen hat die NFI die Nachrichten über eine Referralsperre oder ein Referral_bis zu interpretieren.

Referral_bis: Der Parameter Referral _bis (Kurzreferral) wird bei Mißbrauchsverdacht zur Verhinderung von Genehmigungen benutzt. Es wird manuell mittels einer Autorisierung aktiviert.

Die NFI speichert das Referral_bis Datum im Kartenprofil ab und überprüft bei der Autorisierung, ob das Transaktionsdatum kleiner dem Referral_bis Datum ist. Ist dies der Fall, wird immer ein Referral von der NFI generiert.

Das Referral_bis Parameter wird zur Analyse und Rekonstruktion als Bestandteil des Transaktionsdatensatzes über die TCP/IP-Schnittstelle zum SGI-Rechner übertragen.

Referralsperre: Die Referralsperre wird dazu benutzt, nach einer positiven Identifikation oder nach Sichtung der vergangenen Transaktionen die weitere Auslösung von Referrals zu unterbinden. Die Referralsperre kann die Zustände "gültig" oder "nicht gültig" annehmen. Ist sie "gültig", so wird ein vorher eingestellter Parameter, der einen festen Offset vom aktuellen Transaktionsdatum (zum Beispiel Transaktionsdatum + 3 Tage) angibt, aktiviert. Die Referralsperre ist immer in Form des Datums gegeben, bis zu dem sie gehen soll. Es kann ja nur zum aktuellen Zeitpunkt bestimmt werden, ob die Sperre damit gültig ist oder nicht.

Die Referralsperre kann einerseits vom Investigation Workflow aus aktiviert werden. Andererseits kann die Referralsperre auch indirekt vom Genehmigungsservice ausgelöst werden, wenn nach einem Referral eine positive Identitäts-Überprüfung stattgefunden hat. Nach einer positiven IdentitätsÜberprüfung wird vom Genehmigungsdienst eine Transaktion ausgelöst, die in der NFI verarbeitet wird. Die NFI schreibt die aktuelle Referralsperre in die Cardholder File auf dem Autorisierungsrechner.

Der Fall, daß sowohl eine Referralsperre als auch das Referral_bis Datum gültig ist, muß vermieden werden. Daher wird beim Setzen eines Wertes (zum Beispiel Referral_bis) der jeweils andere gelöscht (zum Beispiel Referralsperre).

### Interne Ausgangsgrößen

Liegen alle Eingangsgrößen vor, die von der NFI verwendet werden, so erzeugt die NFI intern 6 Ausgangsgrößen:
1. Limit
2. RiskScore
3. Fallwichtigkeit
4. Fallschwelle
5. Fallbegründung
6. Decline

Hierbei stellt Limit direkt das transaktionsindividuelle Limit für die aktuelle Autorisierungsanfrage dar. Dieses transaktionsindividuelle Limit wird durch den RiskScore als Malus vermindert ("gleitendes Transaktionslimit").

Die NFI entscheidet nun durch einfachen Vergleich, ob ein Referral erzeugt werden soll oder nicht. Ein Referral wird immer dann erzeugt, wenn der zur Autorisierung angefragte Betrag über dem transaktionsindividuellen Limit liegt. Durch die Größen "Referralsperre" und "Referral_bis" kann die Entscheidung der NFI modifiziert werden.

Die weiteren drei Größen stellen die Entscheidung der NFI bezüglich der Fallgenerierung dar. Die Fallwichtigkeit stellt dar, in zu welchem Grade die aktuelle Autorisierungsanfrage als Fall erzeugt werden soll. Liegt dieser Wert über der Fallschwelle, so wird für die Autorisierung ein Fall erzeugt. Zusätzlich wird als Begründung der Entscheidung, einen Fall aus dieser Autorisierungsnachricht zu generieren, ein Text "Fallklasse" erzeugt, der die Verdachtsart mit Worten beschreibt. Diese Beschreibung wird von dem Mitarbeitern des Investigation Workflow genutzt, um eine gezielte Ermittlungsarbeit durchführen zu können.

Diese Ausgangsgrößen der NFI werden direkt mit der gesamten Information zu der Autorisierung an die Autorisierungsanfrage übertragen. Die bestehende Software zur Autorisierung bearbeitet diese Information dann weiter.

Nach der Berechnung der NFI übergibt die NFI an das System die aktualisierte Zeitreihe. Das System speichert diese in der Cardholder File, um sie bei der nächsten

Autorisierungsanfrage dieser Kartennummer wieder an die NFI zu übergeben.

Die eigentlichen Entscheidungsregeln der NFI werden in einer Datei auf dem Autorisierungsrechner abgelegt. Diese Datei wird von dem Entwicklungswerkzeug auf dem PC erzeugt.

Im folgenden wird die Entscheidungslogik näher erläutert. Dabei werden folgende Abkürzungen verwendet:

**Tabelle 1**

| | |
|---|---|
| AvailBal | Noch verfügbarer Betrag auf der Karte in Euro |
| Betrag | Betrag, der zur Autorisierung angefragt wird (in Euro) |
| BranchenCode | Einzelne Branchencodes |
| Branchenklasse | Klasse der Branche, zu der der VP gehört |
| CountryCode | Ländercode aus der Autorisierungsnachricht |
| CurrencyCode | Währungscode aus Autorisierungsnachricht |
| GAC | Action Code aus Listendefinition |
| ICA_BIN | Herkunft der Transaktion |
| Inanspruchnahme | Noch zu definieren! |
| Kartenalter | Alter der Karte in Tagen gemessen an der Zeit, die seit "gültig ab neu" vergangen ist |
| Kartenlimit | Limit der Karte in Euro |
| KI_Range | Zugehörigkeit der Kartennummer zu Ranges, die als Liste definiert sind |
| letzte Antwort | Wie lange ist der letzte beantwortete Referral/Callme her? |
| letzte GAA | Zeit, die seit der letzten GAA-Abhebung vergangen ist |
| letzter Referral | Wie lange ist der letzte Referral/Callme her? |
| Mandant | Identifikation des Mandanten |
| Merchant_ID | Merchant ID aus Listendefinition |
| Panikfaktor | ist noch zu definieren! |
| POS_Eingabe | Eingabeart der Autorisierungsanfrage |
| Terminal_ID | Terminal ID aus Listendefinition |
| Z01 | Eingangsvariable des Zählers XXXX |
| Z02 | Eingangsvariable des Zählers XXXX |
| Z03 | Eingangsvariable des Zählers XXXX |
| Z04 | Eingangsvariable des Zählers XXXX |
| Z05 | Eingangsvariable des Zählers XXXX |
| Z06 | Eingangsvariable des Zählers XXXX |
| Z07 | Eingangsvariable des Zählers XXXX |
| Z08 | Eingangsvariable des Zählers XXXX |
| Z09 | Eingangsvariable des Zählers XXXX |
| Z10 | Eingangsvariable des Zählers XXXX |
| Z11 | Eingangsvariable des Zählers XXXX |
| Z12 | Eingangsvariable des Zählers XXXX |
| Zeitreihenlänge | Zahl der aktuell in der Zeitreihe gespeicherten Autorisierungsanfragen |
| Decline | Erzeugen eines "harten" Declines |
| Fallklasse | Erklärung, welche Fraud Supervisory and Fraud Investigation "übergibt", um darzustellen, warum gerade dieser Fall erzeugt wurde |
| Fallschwelle | Dies ist die Möglichkeit, in fuzzy TECH "variabel" eine Schwelle für die Fallgenerierung zu definieren |
| Fallwichtigkeit | Grad, in dem die aktuelle Autorisierungsanfrage als "fallwürdig" betrachtet wird |
| GansLimit | Transaktionslimit (nach Benutzerregeln bestimmt (in Euro)) |
| RisikoScore | Risikoscore, der zur Bestimmung des "Malus" bei dem gleitenden Transaktionslimit zugrundegelegt wird |
| Regel-Limit | Transaktionslimit (nach Benutzerregeln bestimmt) |
| Berechne MBF | Berechne Membership Funtion (Fuzzifizierungsmethode) |
| CoM | Center of Maximum (Defuzzifizierungsmethode) |
| MoM | Mean of Maximum (Defuzzifizierungsmethode) |
| Vorgabe | Setzen einer Prozeßvariablen (Visualisierungsinterface) |
| BSUM | Bounded Sum - Operator zur Berechnung der Ergebnisaggregation |
| MIN | Minimum-Operator (UND-Aggregation) |
| MAX | Maximum-Operator (ODER-Aggregation) |
| GAMMA | Kompensatorischer Operator für die Aggregation |
| PROD | Fuzzy Operator für die Komposition |
| LV | Linguistische Variable |
| MBF | Zugehörigkeitsfunktion (Membership Function) |
| RB | Regelblock |

Die Systemstruktur beschreibt den Datenfluß in dem Fuzzysystem. Eingangsinterfaces fuzzifizieren die Eingangsgrößen. Hierbei werden Analogwerte in Zugehörigkeitsgrade umgesetzt. Dem Fuzzifizieren schließt sich die Fuzzy-Inferenz an: Mit in Regelblöcken festgelegten "wenn-dann" Regeln werden durch die Eingangsgrößen sprachlich beschriebene Ausgangsgrößen festgelegt. Diese werden in den Ausgangsinterfaces durch eine Defuzzifizierung in analoge Größen umgewandelt.

Die folgende Abbildung zeigt die Struktur für dieses Fuzzysystem mit Eingangsinterfaces, Regelblöcken und Ausgangsinterfaces. Die Verbindungslinien symbolisieren hierbei den Datenfluß.

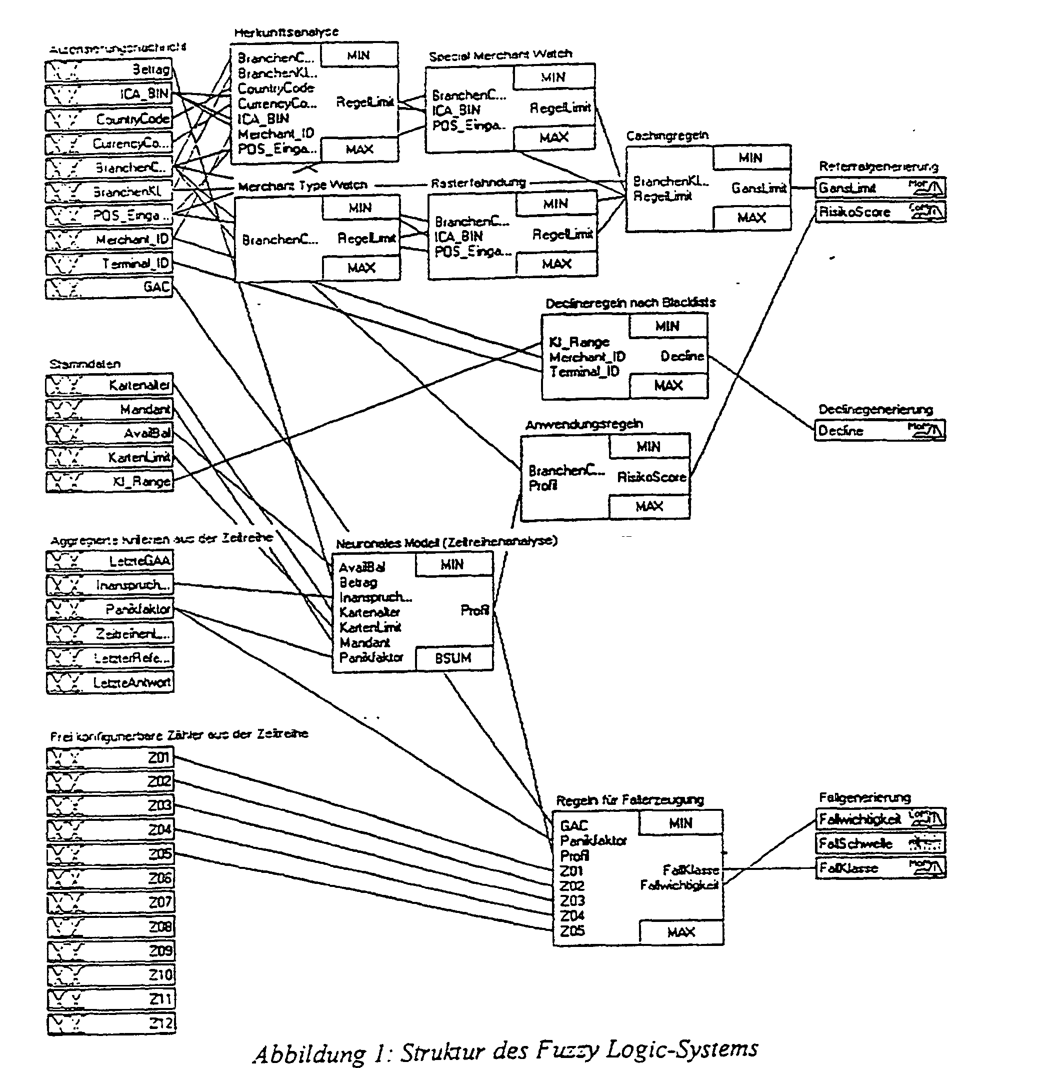

Linguistische Variablen dienen in einem Fuzzysystem dazu, die Werte kontinuierlicher Größen durch sprachliche Begriffe zu beschreiben. Die möglichen Werte einer linguistischen Variablen sind keine Zahlen, sondern sprachliche Begriffe, auch Terme genannt.

Für alle Eingangs-, Ausgangs- und Zwischengrößen des Fuzzy-Systems werden linguistische Variablen definiert. Die Zugehörigkeitsfunktionen der Terme sind durch Stützstellen, die sogenannten Definitionspunkte, eindeutig festgelegt.

Die folgende Tabelle listet alle linguistischen Variablen zusammen mit den Termnamen auf.

**Tabelle 2:**

| Linguistische Variablen | |
|---|---|
| AvailBal | niedrig, mittel, hoch |
| Betrag | niedrig, mittel, größer_1000, hoch |
| BranchenCode | FlugAllg, Kaufhaus, Pelze, Teppiche, Schallplatten, Nachtlokale, Waffensprot, Juwelier, Foto, Leder, alle Banking, HotelAllg, alle5erMCC, Massage, AutoAllg, FunFreizeit |
| Branchenklasse | Hotel, Airlines, Auto, Buiz_serv, Car_rentals, Cashing, Clothing, contrctd_services, mail_order, misc_store, nicht5311, pers_services, retail, services, transportation. utilities, -cashing |
| CountryCode | Ägypten, Brasilien, Equador, Hongkong, Indonesien, Israel, Kolumbien, Malaisia, Marokko, Mexiko, Singapur, Thailand, Türkei, Venezuela, Kanada |
| CurrencyCode | f_franc, drachme, forinth, gulden, i_lira, peseta, pfund |
| GAC | bad_cvc |
| ICA_BIN | Visa_quer, mexiko_spezial, -mexiko_spezial |
| Inanspruchnahme | niedrig, mittel, hoch |
| Kartenalter | sehr_neu, neu, alt |
| Kartenlimit | niedrig, mittel, hoch |
| KI_Range | kein_range, fraud_nz, alle_anderen |
| letzte Antwort | gerade_erst, v_lang_her |
| letzte GAA | gerade_erst, mittel, lang_her |
| letzter Referral | gerade_erst, v_lang_her |
| Mandant | kein_mandant, gzs, airplus |
| Merchant_ID | wempe |
| Panikfaktor | niedrig, mittel, hoch |
| POS_Eingabe | unbekannt, unbek_o_manuell, manuell, gelesen, electr_ commerce, gelesen_geprüft |
| Terminal_ID | krimin_figaro |
| Z01 | mehr_als_vier |
| Z02 | mehr_als_vier |
| Z03 | mehr_als_vier |
| Z04 | mehr_als_vier |
| Z05 | mehr_als_vier |
| Z06 | mehr_als_vier |
| Z07 | mehr_als_vier |
| Z08 | mehr_als_vier |
| Z09 | mehr_als_vier |
| Z10 | mehr_als_vier |
| Z11 | mehr_als_vier |
| Z12 | mehr_als_vier |
| Zeitreihenlänge | hoch |
| Decline | kein_decline, decline |
| Fallklasse | counterfeit, hongkong, cvc_queue, ungarn, watchlist, juweliere |
| Fallwichtigkeit | unverdächtig, mittel, verdächtig |
| Limit | _0,_100,_250,_500,_1000,_2500,_7500 |
| RisikoScore | unverdächtig, mittel, verdächtig |
| Profil | unverdächtig, riskant |
| Regel-Limit | _0,_100,_250,_100,_1000,_2500,_7500 |

Die Eigenschaften der Basisvariablen sind in der folgenden Tabelle aufgelistet.

**Tabelle 3:**

| Basisvariablen | | | | |
|---|---|---|---|---|
| Variablenname | Min | Max | Default | Einheit |
| AvailBal | 0 | 20000 | 0 | Euro |
| Betrag | 0 | 20000 | 0 | Euro |
| BranchenCode | 0 | 9999 | 0 | MCC |
| Branchenklasse | 0 | 32 | 0 | Codewert_Liste |
| CountryCode | 0 | 999 | 0 | CC_Schlüssel |
| CurrencyCode | 0 | 999 | 0 | CC_Schlüssel |
| GAC | 0 | 32 | 0 | Codewert_Liste |
| ICA_BIN | 0 | 32 | 0 | Codewert_Liste |
| Inanspruchnahme | 0 | 100 | 0 | Prozent |
| Kartenalter | 0 | 100 | 0 | Tage |
| Kartenlimit | 0 | 20000 | 0 | Euro |
| KI_Range | 0 | 32 | 0 | Codewert_Liste |
| letzte Antwort | 0 | 45 | 45 | Tage |
| letzte GAA | 0 | 45 | 0 | Tage |
| letzter Referral | 0 | 45 | 45 | Tage |
| Mandant | 0 | 32 | 0 | Codewert_Liste |
| Merchant_ID | 0 | 32 | 0 | Codewert_Liste |
| Panikfaktor | 0 | 100 | 0 | Prozent |
| POS_Eingabe | 0 | 32 | 0 | POS_Entry_ Mode |
| Terminal_ID | 0 | 32 | 0 | Codewert_Liste |
| Z01 | 0 | 32 | 0 | Anzahl |
| Z02 | 0 | 32 | 0 | Anzahl |
| Z03 | 0 | 32 | 0 | Anzahl |
| Z04 | 0 | 32 | 0 | Anzahl |
| Z05 | 0 | 32 | 0 | Anzahl |
| Z06 | 0 | 32 | 0 | Anzahl |
| Z07 | 0 | 32 | 0 | Anzahl |
| Z08 | 0 | 32 | 0 | Anzahl |
| Z09 | 0 | 32 | 0 | Anzahl |
| Z10 | 0 | 32 | 0 | Anzahl |
| Z11 | 0 | 32 | 0 | Anzahl |
| Z12 | 0 | 32 | 0 | Anzahl |
| Zeitreihenlänge | 0 | 32 | 0 | AutoriAnfragen |
| Decline | 0 | 1 | 0 | _ |
| Fallklasse | 0 | 32 | 0 | Codewert_Liste |
| Fallschwelle | 0 | 1000 | 750 | Schwelle |
| Fallwichtigkeit | 0 | 1000 | 0 | Promille |
| Limit | 0 | 30000 | 0 | Euro |
| RisikoScore | 0 | 1000 | 0 | Promille |

Der Defaultwert wird von der Ausgangsvariablen angenommen, wenn für diese Variable keine Regel feuert. Für die Defuzzifizierung können unterschiedliche Methoden eingesetzt werden, die entweder das "plausibelste Resultat" oder den "besten" Kompromiß liefern.

Zu den kompromißbildenden Verfahren gehören:
CoM (Center of Maximum)
CoA (Center of Area)
CoA BSUM, eine Variante für effiziente VLSI-Implementierungen

Das "plausibelste Resultat" liefern:
MoM (Mean of Maximum)
MoM BSUM, eine Variante für effiziente VLSI-Implementierungen

Die folgende Tabelle listet alle mit einem Interface verknüpften Variablen auf, sowie die entsprechende Fuzzifizierungs- bzw. Defuzzifizierungsmethode.

**Tabelle 4:**

| Interfaces | | |
|---|---|---|
| Variablenname | Typ | Fuzzifizierung/ Defuzzifizierung |
| AvailBal | Eingang | Berechne MBF |
| Betrag | Eingang | Berechne MBF |
| BranchenCode | Eingang | Berechne MBF |
| Branchenklasse | Eingang | Berechne MBF |
| CountryCode | Eingang | Berechne MBF |
| CurrencyCode | Eingang | Berechne MBF |
| GAC | Eingang | Berechne MBF |
| ICA_BIN | Eingang | Berechne MBF |
| Inanspruchnahme | Eingang | Berechne MBF |
| Kartenalter | Eingang | Berechne MBF |
| Kartenlimit | Eingang | Berechne MBF |
| KI_Range | Eingang | Berechne MBF |
| letzte Antwort | Eingang | Berechne MBF |
| letzte GAA | Eingang | Berechne MBF |
| letzter Referral | Eingang | Berechne MBF |
| Mandant | Eingang | Berechne MBF |
| Merchant_ID | Eingang | Berechne MBF |
| Panikfaktor | Eingang | Berechne MBF |
| POS_Eingabe | Eingang | Berechne MBF |
| Terminal_ID | Eingang | Berechne MBF |
| Z01 | Eingang | Berechne MBF |
| Z02 | Eingang | Berechne MBF |
| Z03 | Eingang | Berechne MBF |
| Z04 | Eingang | Berechne MBF |
| Z05 | Eingang | Berechne MBF |
| Z06 | Eingang | Berechne MBF |
| Z07 | Eingang | Berechne MBF |
| Z08 | Eingang | Berechne MBF |
| Z09 | Eingang | Berechne MBF |
| Z10 | Eingang | Berechne MBF |
| Z11 | Eingang | Berechne MBF |
| Z12 | Eingang | Berechne MBF |
| Zeitreihenlänge | Eingang | Berechne MBF |
| Decline | Ausgang | MoM |
| Fallklasse | Ausgang | MoM |
| Fallschwelle | Ausgang | Vorgabe |
| Fallwichtigkeit | Ausgang | CoM |
| Limit | Ausgang | MoM |
| RisikoScore | Ausgang | CoM |

### Regelblöcke

Das Verhalten des Reglers in den verschiedenen Prozeßsituationen wird durch die Regelblöcke festgelegt. Jeder einzelne Regelblock enthält Regeln für einen festen Satz von Eingangs- und Ausgangsvariablen.

Der "wenn"-Teil der Regeln beschreibt dabei die Situation, in der die Regel gelten soll, der "dann"-Teil die Reaktion hierauf. Durch den "Degree of Support" (DoS) kann hierbei den einzelnen Regeln ein unterschiedliches Gewicht gegeben werden.

Zur Auswertung der Regeln wird zuerst der "wenn"-Teil berechnet. Hierbei können verschiedene Verfahren eingesetzt werden, die durch den Operatortyp des Regelblocks festgelegt sind. Der Operator kann vom Typ MIN-MAX, MIN-AVG oder GAMMA sein. Das Verhalten des Operators wird zusätzlich durch eine Parametrisierung beeinflußt.

### Beispielsweise:

| | |
|---|---|
| MIN-MAX, mit dem Parameterwert 0 | = Minimum-Operator (MIN). |
| MIN-MAX, mit dem Parameterwert 1 | = Maximum-Operator (MAX). |
| GAMMA, mit dem Parameterwert 0 | = Produkt-Operator (PROD). |

Der Minimum-Operator ist die Verallgemeinerung des boolschen "und" und der Maximum-Operator ist die Verallgemeinerung des boolschen "oder".

Die Ergebnisse der einzelnen Regeln werden bei der anschließenden Fuzzy-Composition zu Gesamtschlußfolgerungen zusammengefaßt. Die BSUM-Methode betrachtet hierbei alle für einen Zustand feuernden Regeln, während die MAX-Methode nur dominante Regeln berücksichtigt.

## Patentansprüche

1. Computersystem zum Bestimmen eines Ausmaßes eines Risikos, dass eine aktuelle Transaktion in einem computergesteuerten Transaktionsverarbeitungssystem betrügerisch ist, umfassend:
ein Vorhersagemodell-Modul;
eine Einrichtung zum Empfangen von Daten betreffend die aktuelle Transaktion, wobei die Einrichtung zum Empfangen von Daten in dem Vorhersagemodell-Modul ist;
eine Einrichtung zum Identifizieren eines Zahlungsmittels, das in früheren Transaktionen verwendet worden ist, wobei die Einrichtung zum Identifizieren des Zahlungsmittels in dem Vorhersagemodell-Modul ist;
eine NeuroFuzzyInferenzmaschine zum Kombinieren eines Limits mit einem Wert und zum Erzeugen eines Ausgabewertes, der das Ausmaß de Risikos darstellt, dass die aktuelle Transaktion betrügerisch ist, wobei die NeuroFuzzyInferenzmaschine zum Kombinieren des Limits mit dem Wert und zum Erzeugen des Ausgabewertes in dem Vorhersagemodell-Modul ist; und
eine Einrichtung zum Initiieren einer von mehreren möglichen Reaktionen betreffend die aktuelle Transaktion;
wobei die Reaktionen unterschiedliche Ausmaße entsprechend dem Ausgabewert aufweisen, wobei der Ausgabewert das Ausmaß des Risikos angibt, dass die aktuelle Transaktion betrügerisch ist;
wobei das Limit auf Expertenregeln basiert und das Limit für einen Transaktionstyp spezifisch ist;
wobei der Wert auf einer Zeitreihenanalyse einer vorgebbaren Anzahl zeitlich letzter Transaktionen betreffend das Zahlungsmittels basiert und der Wert für die aktuelle Transaktion spezifisch ist;
wobei die Kombination des Limits mit dem Wert in der NeuroFuzzyInferenzmaschine gleitend erfolgt, so dass sich der Ausgabewert entsprechend einem Ausmaß des Risikos, dass die aktuelle Transaktion betrügerisch ist, ergibt und
wobei die Zeitreihenanalyse der früheren Transaktionen betreffend das Zahlungsmittel in der NeuroFuzzyInferenzmaschine auf der Grundlage der genannten zeitlich letzten Transaktionen durchgeführt wird, die in einem Ringpuffer zwischengespeichert sind.

2. Computersystem nach Anspruch 1,
**dadurch gekennzeichnet, dass** die Expertenregeln Parameter betreffen, die statistisch signifikant, kumulativ bei betrügerischen Transaktionen auftreten.

3. Computersystem nach Anspruch 2,
**dadurch gekennzeichnet, dass** die Parameter eine Herkunft des Zahlungsmittels, eine Herkunft des Benutzers, eine Branche, eine Person, die durch die Transaktion Begünstigten, eine Höhe oder einen Wert der Transaktion betreffen.

4. Computersystem nach Anspruch 1 bis 3,
**dadurch gekennzeichnet, dass** die Zeitreihenanalyse in Form von Fuzzy-Logik-Regeln implementiert ist.

5. Computersystem nach einem der Ansprüche 1 bis 4,
**dadurch gekennzeichnet, dass** die Expertenregeln in Form von Fuzzy-Logik-Regeln implementiert sind.

6. Verfahren zum Betreiben eines Rechners zum Bestimmen eines Ausmaßes eines Risikos, dass eine aktuelle Transaktion in einem rechnergesteuerten Transaktionsverarbeitungssystem betrügerisch ist, umfassend die Schritte:
Empfangen von Daten betreffend die aktuelle Transaktion in einem Vorhersagemodell;
Identifizieren eines Zahlungsmittels, das in früheren Transaktionen verwendet worden ist mittels des Vorhersagemodells;
Kombinieren eines Limits mit einem Wert mittels einer NeuroFuzzyInferenzmaschine in dem Vorhersagemodell zum Erzeugen eines Ausgabewertes, der das Ausmaß des Risikos, dass die aktuelle Transaktion betrügerisch ist, darstellt; und
Initiieren einer von mehreren möglichen Reaktionen betreffend die aktuelle Transaktion;
wobei die Reaktionen unterschiedliche Ausmaße entsprechend dem Ausgabewert aufweisen, der das Ausmaß des Risikos angibt, dass die aktuelle Transaktion betrügerisch ist;
wobei das Limit auf Expertenregeln basiert und wobei das Limit für eine Transaktionsart spezifisch ist;
wobei der Wert auf einer Zeitreihenanalyse einer vorgebbaren Anzahl zeitlich letzter Transaktionen, betreffend das gleiche Zahlungsmittel basiert und wobei der Wert für die aktuelle Transaktion spezifisch ist;
wobei die Kombination des Limits mit dem Wert in der NeuroFuzzyInferenzmaschine gleitend erfolgt, so dass sich der Ausgabewert in Übereinstimmung mit dem Risiko, dass die aktuelle Transaktion betrügerisch ist, ergibt; und
wobei die Zeitreihenanalyse der früheren Transaktionen betreffend das Zahlungsmittel in der NeuroFuzzyInferenzmaschine auf der Grundlage der gennanten zeitlich letzten Transaktionen durchgeführt wird,die in einem Ringpuffer zwischengespeichert sind.

7. Verfahren nach Anspruch 6,
**dadurch gekennzeichnet, dass** die Expertenregeln Parameter betreffen, die statistisch signifikant in kumulativer Art und Weise während betrügerischer Transaktionen auftreten.

8. Verfahren nach Anspruch 7,
**dadurch gekennzeichnet, dass** die Parameter zumindest eine Herkunft des Zahlungsmittels, eine Herkunft der Zahlung, eine Herkunft des Benutzers, eine Branche, eine Person, die durch die Transaktion Begünstigten, eine Höhe oder einen Wert der aktuellen Transaktion betreffen.

9. Verfahren nach einem der Ansprüche 6 bis 8,
**dadurch gekennzeichnet, dass** die Zeitreihenanalyse in Form von Fuzzy-Logik-Regeln implementiert ist.

10. Verfahren nach einem der Ansprüche 6 bis 9,
**dadurch gekennzeichnet, dass** die Expertenregeln in Form von Fuzzy-Logik-Regeln implementiert sind.

11. Ein Computerprogrammprodukt, das direkt in einen Arbeitspeicher eines Rechners ladbar ist, umfassend Softwarecodes zum Ausführen der Schritte von Anspruch 6, wenn das Computerprogrammprodukt auf einem Computer ausgeführt wird.

## Claims

1. Computer system for determining an extent of a risk, that a current transaction in a computer controlled transaction processing system is fraudulent, comprising:
a prediction model module;
a device for receiving data relating to the current transaction,
wherein the device for receiving data is in the prediction model module;
a device for identifying a means of payment, which has been used in former transactions, wherein the device for identifying the means of payment is in the prediction model module;
a Neuro Fuzzy Inference Machine for combining a limit with a value and for generating an output value, which presents the extent of the risk that the current transaction is fraudulent, wherein the Neuro Fuzzy Inference Machine for combining the limit with the value and for generating the output value is in the prediction model module; and
a device for initiating one of several possible reactions relating to the current transaction;
wherein the reactions have different extents according to the output value, wherein the output value indicates the extent of the risk that the current transaction is fraudulent;
wherein the limit is based on expert rules and the limit is specific for a transaction type;
wherein the value is based on a time series analysis of a presettable number of temporally last transactions relating to the means of payment, and wherein the value is specific for the current transaction;
wherein the combination of the limit with the value in the Neuro Fuzzy Inference Machine is performed in a sliding manner, so that the output value is resulting according to an extent of a risk that the current transaction is fraudulent, and
wherein the time series analysis of the former transactions relating to the means of payment in the Neuro Fuzzy Inference Machine is performed on the basis of the designated temporally last transactions, which are buffered in a ring buffer.

2. Computer system of claim 1,
**characterized in that** the expert rules relate to parameters, which occur statistically significantly, cumulatively with fraudulent transactions.

3. Computer system of claim 2,
**characterized in that** the parameters relate to an origin of the means of payment, an origin of the user, a branch, a person, the beneficiaries of the transaction, a level or a value of the transaction.

4. Computer system of claim 1 to 3,
**characterized in that** the time series analysis is implemented in form of Fuzzy-Logic-Rules.

5. Computer system of one of claims 1 to 4,
**characterized in that** the expert rules are implemented in form of Fuzzy-Logic-Rules.

6. Method of operating a processor for determining an extent of a risk that a current transaction in a processor controlled transaction processing system is fraudulent, comprising the steps of:
receiving of data relating to the current transaction in a prediction model;
identifying a means of payment, which has been used in former transactions by means of the prediction model;
combining a limit with a value by means of a Neuro Fuzzy Inference Machine in the prediction model for generating an output value, which presents the extent of the risk that the current transaction is fraudulent, and
initiating one of several possible reactions relating to the current transaction;
wherein the reactions have different extents according to the output value, wherein the output value indicates the extent of the risk that the current transaction is fraudulent;
wherein the limit is based on expert rules and wherein the limit is specific for a transaction type;
wherein the value is based on a time series analysis of a presettable number of temporally last transactions relating to the same means of payment, and wherein the value is specific for the current transaction;
wherein the combination of the limit with the value in the Neuro Fuzzy Inference Machine is performed in a sliding manner, so that the output value is resulting according to the risk that a current transaction is fraudulent; and
wherein the time series analysis of the former transactions relating to the means of payment in the Neuro Fuzzy Inference Machine is performed on the basis of the designated temporally last transactions, which are buffered in a ring buffer.

7. Method of claim 6,
**characterized in that** the expert rules relate to parameters, which occur statistically significantly in a cumulative manner during fraudulent transactions.

8. Method of claim 7,
**characterized in that** the parameters relate to at least an origin of the means of payment, an origin of the payment, an origin of the user, a branch, a person, the beneficiaries of the transaction, a limit or a value of the current transaction.

9. Method of claim 6 to 8,
**characterized in that** the time series analysis is implemented in form of Fuzzy-Logic-Rules.

10. Method of one of claims 6 to 9,
**characterized in that** the expert rules are implemented in form of Fuzzy-Logic-Rules.

11. A computer program product, which is directly loadable into a working memory of a processor, comprising software codes for performing the steps of claim 6, when the computer program product is executed on a computer.

## Revendications

1. Système informatique permettant d'évaluer le risque qu'une transaction actuelle dans un système de traitement de transactions assisté par ordinateur est frauduleuse, comprenant :
un module de modèle de prévisions ;
un dispositif de réception de données concernant la transaction actuelle, ce dispositif de réception de données se trouvant dans le module de modèle de prévisions ;
un dispositif d'identification d'un moyen de paiement utilisé dans des transactions précédentes, ce dispositif d'identification d'un moyen de paiement se trouvant dans le module de modèle de prévisions ;
un moteur d'inférence neuroflou pour combiner une limite avec une valeur et pour générer une valeur de sortie qui représente l'importance du risque que la transaction actuelle est frauduleuse, le moteur d'inférence neuroflou étant utilisé pour combiner la limite avec la valeur et pour générer la valeur de sortie se trouvant dans le module de modèle de prévisions ; et
un dispositif pour démarrer une réaction parmi plusieurs réactions possibles concernant la transaction actuelle, les réactions présentant une importance différente selon la valeur de sortie, la valeur de sortie indiquant l'importance du risque que la transaction actuelle est frauduleuse ;
la limite étant basée sur des règles d'experts et la limite étant spécifique à un type de transaction ;
la valeur étant basée sur une analyse chronologique d'un nombre prédéterminé des dernières transactions concernant le moyen de paiement et la valeur étant spécifique à la transaction actuelle ;
la combinaison de la limite avec la valeur dans le moteur d'inférence neuroflou étant réalisée de manière glissante, de telle sorte que la valeur de sortie soit déterminée en fonction de l'importance du risque que la transaction actuelle est frauduleuse et
l'analyse chronologique des transactions précédentes concernant le moyen de paiement dans le moteur d'inférence neuroflou étant effectuée sur la base desdites dernières transactions qui sont enregistrées dans une mémoire tampon circulaire.

2. Système informatique selon la revendication 1, **caractérisé en ce que** les règles d'experts concernent des paramètres qui apparaissent de manière cumulative et significative du point de vue statistique dans les transactions frauduleuses.

3. Système informatique selon la revendication 2, **caractérisé en ce que** les paramètres concernent l'origine du moyen de paiement, l'origine de l'utilisateur, une branche, une personne, les bénéficiaires de la transaction, le montant ou la valeur de la transaction.

4. Système informatique selon la revendication 1 à 3, **caractérisé en ce que** l'analyse chronologique est effectuée sur la base de règles de logique floue.

5. Système informatique selon l'une des revendications 1 à 4, **caractérisé en ce que** les règles d'experts se présentent sous la forme de règles de logique floue.

6. Procédé d'utilisation d'un ordinateur pour déterminer l'importance d'un risque qu'une transaction actuelle dans un système de traitement de transactions assisté par ordinateur est frauduleuse, comprenant les étapes suivantes :
réception des données concernant la transaction actuelle dans un modèle de prévisions ;
identification du moyen de paiement qui a été utilisé dans des transactions précédentes à l'aide du modèle de prévisions ;
combinaison d'une limite avec une valeur à l'aide d'un moteur d'inférence neuroflou dans le module de prévisions afin de générer une valeur de sortie qui représente l'importance du risque que la transaction actuelle est frauduleuse ; et
initiation d'une réaction parmi plusieurs réactions possibles concernant la transaction actuelle ;
les réactions présentant une importance différente selon la valeur de sortie qui indique l'importance du risque que la transaction actuelle est frauduleuse ;
la limite étant basée sur des règles d'experts et la limite étant spécifique à un type de transactions ;
la valeur étant basée sur une analyse chronologique d'un nombre prédéterminé des dernières transactions concernant le même moyen de paiement et la valeur étant spécifique à la transaction actuelle ;
la combinaison de la limite avec la valeur étant réalisée de manière glissante dans le moteur d'inférence neuroflou de telle sorte que la valeur de sortie corresponde au risque que la transaction actuelle est frauduleuse ; et
l'analyse chronologique des transactions précédentes concernant le moyen de paiement dans le moteur d'inférence neuroflou étant effectuée sur la base desdites dernières transactions qui sont enregistrées dans une mémoire tampon circulaire.

7. Procédé selon la revendication 6, **caractérisé en ce que** les règles d'experts concernent des paramètres qui apparaissent de manière cumulative et significative du point de vue statistique dans les transactions frauduleuses.

8. Procédé selon la revendication 7, **caractérisé en ce que** les paramètres concernent au moins l'origine du moyen de paiement, l'origine du paiement, l'origine de l'utilisateur, une branche, une personne, les bénéficiaires de la transaction, le montant ou la valeur de la transaction actuelle.

9. Procédé selon l'une des revendications 6 à 8, **caractérisé en ce que** l'analyse chronologique est mise en place à l'aide de règles de logique floue.

10. Procédé selon l'une des revendications 6 à 9, **caractérisé en ce que** les règles d'experts sont mises en place sous la forme de règles de logique floue.

11. Programme informatique pouvant être chargé directement dans la mémoire de travail d'un ordinateur, comprenant des codes de logiciel pour l'exécution des étapes de la revendication 6 lorsque le programme informatique est exécuté sur un ordinateur.
